# EUROPEAN PATENT APPLICATION

(11) **EP 1 126 405 A2**
(43) Date of publication of application: **22.08.2001**
(21) Application number: 00114187.8
(22) Date of filing: 13.07.2000
(51) Int. Cl.: G06K 9/62

(54) **Private dictionary image forming system**

(30) Priority: 31.01.2000 JP 2000062693
(71) Applicant: Keyence Corporation, Osaka-shi, Osaka 533-8555 (JP)
(72) Inventor: Nishio, Yoshiaki, c/o Keyence Corporation, Osaka-shi, Osaka 533-8555 (JP)
(74) Representative: HOFFMANN - EITLE

(57) **Abstract**

A color camera picks up images of one sample that is the same type as an object to be processed. Then circumscribed rectangles of characters are extracted from the images by a private dictionary image forming system. Next, change amounts are calculated and they are used to change pixel numbers, aspect ratios, and line widths of the standard font images contained in a master font dictionary stored in a memory so that they match with the circumscribed rectangles. The change amounts are then applied to change the sizes, the aspect ratios, and the line widths of the characters of standard font images for all of the characters contained in the master font dictionary. These changed images are then stored as private dictionary images in the memory.

## Description

### BACKGROUND OF THE INVENTION

### 1. Field of the Invention

The present invention relates to a private dictionary image forming system for generating a private dictionary image as a template image, which is supplied for pattern matching, based on images containing characters.

### 2. Discussion of the Related Art

A character recognition system that has been practically implemented can execute the character recognition by extracting the area containing the character from other picked-up images and then deciding whether or not the character is contained in the template image, based on pattern matching with the template image.

Such a character recognition system has already been used in various industrial fields. For example, the character recognition system has been applied to a system for checking the date of production printed on a product, a system for identifying a product based on the manufacturer's serial number printed on the product in the mixed manufacturing line and the package for wrapping the product, or the like.

There are various font, size, and line widths of the printed characters. Thus, in order to execute a high precision character recognition, private template images are needed for every character that is subjected to the character recognition. Also, since the size of the character being picked up as the image differs according to the distance between the camera and the picked object and the shooting magnification, the necessary template image becomes different every time the position of the camera, the shooting magnification, etc. are changed. This type of character recognition system prepares the template images prior to the character recognition process.

In the conventional character recognition system, in order to prepare the template image, an image of a sample work of the product that will be subjected to the character recognition process is picked up. Then, the area of the characters from the resultant image is picked-up and it is extracted to store in a memory. This result is used as the template image.

However, in the conventional method as described above, in order to prepare the template images of all characters represented by all of the fonts employed in the printing process, samples of all of the characters to be printed by the above fonts must be completed. As the characters employed in the printing, 10 characters are needed for numeric characters and 40 characters are needed if alphabetic characters and symbols are also included. Therefore, it takes a great deal of time to complete the sampling process, and thus there is such a problem that the work for preparing the template image requires a large amount of time and labor.

Also, in some cases there is dirt stuck onto the sample work or there is a blur or blot of the character, etc. These are also picked up together with the character in the image in which the sample image is picked up. If the template image is formed using these picked-up images, the dirt, blur or blot, etc. will be contained in the template image. Thus, there is a problem that these incorrect images cause a decline in the precision of the character recognition.

### SUMMARY OF THE INVENTION

The present invention has been made in light of such circumstances. It is an object of the present invention to provide a private dictionary image forming system that is capable of considerably reducing the time and labor required to prepare a private dictionary image without completing the sampling process for all necessary characters. Such a system notes that by previously storing the master font dictionary having a standard font image of the same font, then comparing the image obtained by picking up the image of one sample on which the character is printed with the standard font image, then calculating a change amount to change the standard font image to match that of a picked-up image, then changing at least one of a size, an aspect ratio, and a line width of the character, for example, of a plurality of standard font images which have different characters of the same font respectively by using such change amount, and then forming the private dictionary images of all of the characters necessary for the template image.

Also, it is another object of the present invention to provide a private dictionary image forming system which is capable of preventing a reduction in the precision of the character recognition so as not to contain dirt, a blur or a blot, etc. in a private dictionary image, by forming the private dictionary images by changing the size, the aspect ratio, and the line width of the standard font images which do not contain dirt, blur, blot, or the like.

According to a first aspect of the invention, there is provided a private dictionary image forming system and method for forming a private dictionary image using image processing by changing a master font dictionary stored previously in a memory based on an image which contains a character, comprising: character extracting means for extracting an area in which the character is contained from the image; character image selecting means for selecting a standard font image which is identical to the character extracted by the character extracting means from the master font dictionary; comparing/change-amount calculating means for comparing the area extracted by the character extracting means with a standard font image selected from the master font dictionary by the character image selecting means, and calculating a change amount; and dictionary image changing means for changing the master font dictionary by using the change amount calculated by the comparing/change-amount calculating means to form the private dictionary image.

According to a second aspect of the invention, there is provided a private dictionary image forming system for forming a private dictionary image employed in an image processing from a plurality of master font dictionaries stored previously in a memory, based on images which contain characters, comprising: character extracting means for extracting areas in which the characters are contained from the images; character image selecting means for selecting standard font images which are identical to the characters extracted by the character extracting means from the plurality of master font dictionaries; comparing/change-amount calculating means for comparing the areas extracted by the character extracting means with respective standard font images selected from the plurality of master font dictionaries by the character image selecting means, and calculating respective change amounts; character changing means for changing the respective standard font images selected from the plurality of master font dictionaries by using the respective change amounts calculated by the comparing/change-amount calculating means to obtain changed character images; correlation value calculating means for calculating a cross correlation value between respective changed character images obtained by the character changing means and the areas extracted by the character extracting means; dictionary image selecting means for selecting a master font dictionary having the standard font image which is a base of the changed character images with a maximum cross correlation value out of a plurality of cross correlation values calculated by the correlation value calculating means; and dictionary image changing means for changing the master font dictionary by using the change amounts calculated by the comparing/change-amount calculating means to form the private dictionary image.

According to a third aspect of the invention, there is provided a private dictionary image forming system for forming a private dictionary image employed in an image processing by changing a master font dictionary stored previously in a memory based on an image which contains a character, comprising: character extracting means for extracting an area in which the character is contained from the image; character image selecting means for selecting a standard font image which is a part of the master font dictionary and is substantially identical to the character extracted by the character extracting means; comparing/change-amount calculating means for comparing the area extracted by the character extracting means with a standard font image selected from the master font dictionary by the character image selecting means, and calculating a change amount; and dictionary image changing means for changing all of the master font dictionary by using the change amount calculated by the comparing/change-amount calculating means to form the private dictionary image.

According to a fourth aspect of the invention, there is provided a private dictionary image forming system for forming a private dictionary image employed in an image processing from a plurality of master font dictionaries stored previously in a memory, based on images which contain characters, comprising: character extracting means for extracting areas in which the characters are contained from the images; character image selecting means for selecting standard font images which are a part of the plurality of master font dictionaries and are substantially identical to the characters extracted by the character extracting means; comparing/change-amount calculating means for comparing the areas extracted by the character extracting means with respective standard font images selected from the plurality of master font dictionaries by the character image selecting means, and calculating respective change amounts; character changing means for changing the respective standard font images selected from the plurality of master font dictionaries by using the respective change amounts calculated by the comparing/change-amount calculating means to obtain changed character images; correlation value calculating means for calculating a cross correlation value between respective changed character images obtained by the character changing means and the areas extracted by the character extracting means; dictionary image selecting means for selecting a master font dictionary having a standard font image which is a base of the changed character images with a maximum cross correlation value out of a plurality of cross correlation values calculated by the correlation value calculating means; and dictionary image changing means for changing all the master font dictionary by using the change amount calculated by the comparing/change-amount calculating means to form the private dictionary image.

### BRIEF DESCRIPTION OF THE DRAWINGS

FIG. 1 is a block diagram showing a configuration of the pertinent portions of a private dictionary image forming system according to an embodiment of the present invention.

FIG. 2 is a schematic view showing an original image picked up when an image of a sample or work is picked up.

FIG. 3 is a flowchart showing a first part of a private dictionary image forming process.

FIG. 4 is a flowchart showing a second part of the private dictionary image forming process.

FIG. 5 is a flowchart showing a third part of the private dictionary image forming process.

FIG. 6 is a flowchart showing a fourth part of the private dictionary image forming process.

FIG. 7 is a flowchart showing a fifth part of the private dictionary image forming process.

FIG. 8 is a schematic view showing standard font images.

FIG. 9 is a schematic view showing a process for changing the pixel number and the aspect ratio of the standard font image.

### DETAILED DESCRIPTION OF THE PREFERRED EMBODIMENTS

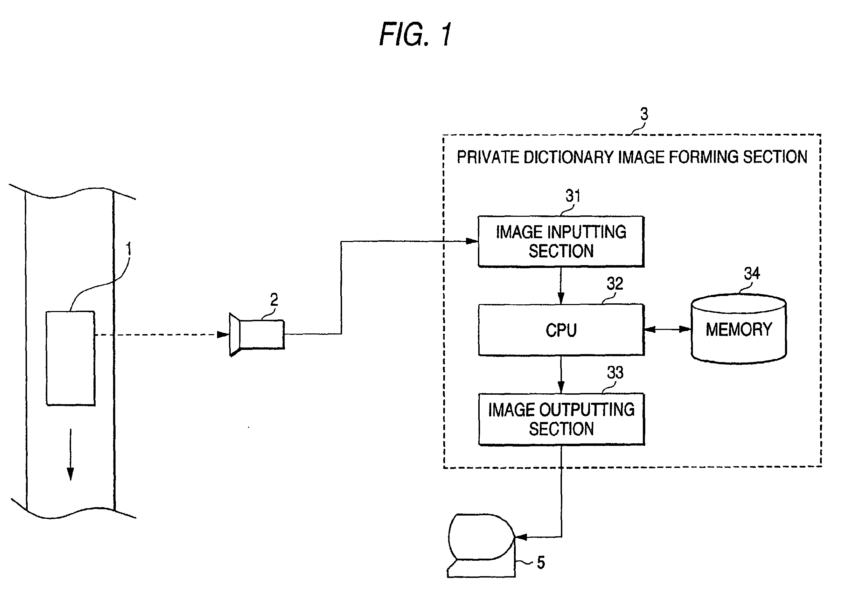

The present invention will be explained in detail with reference to the drawings showing the embodiments hereinafter. FIG. 1 is a block diagram showing a configuration of the pertinent portions of an embodiment of a private dictionary image forming system according to the present invention.

In FIG. 1, reference numeral 1 designates a work or sample of an object whose image is picked up. A belt conveyer transfers the work or sample 1. A color camera 2 is provided on the side of the belt conveyer such that an image of the work or sample 1 can be picked up. The color camera 2 supplies analog R, G, B values of the picked-up original image to a private dictionary image forming system 3 connected thereto.

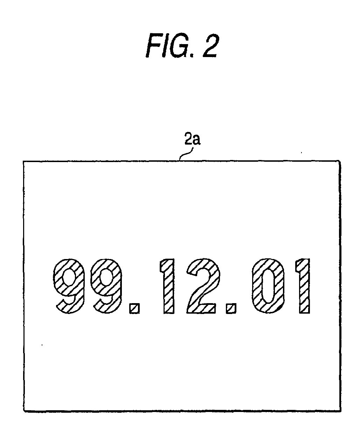

The private dictionary image forming system 3 comprises an image inputting section 31 using an A/D converter, etc., a CPU 32 for executing arithmetic operations, a memory 34 for storing information supplied from the CPU 32, and an image outputting section 33 using a D/A converter, etc. The image inputting section 31 converts the analog R, G, B values supplied from the color camera 2 into digital R, G, B values, and then supplies them to the CPU 32. The CPU 32 stores the supplied R, G, B values in the memory 34, and also supplies the R, G, B values to the image outputting section 33. The image outputting section 33 converts the supplied digital R, G, B values into analog R, G, B values, and outputs an original image 2a, as shown in FIG. 2, to a display device 5 such as a CRT connected to the private dictionary image forming system 3 to display it on a screen.

FIG. 2 is a schematic view showing the original image 2a obtained when an image of the work or sample 1 is picked up. As shown in FIG. 2, on a side surface of the work 1, the date is printed in black on a colored background, such as yellow. In order to decide whether or not this date is a correct one, character recognition is carried out by the private dictionary image forming system 3 based on pattern matching using the template images.

Prior to such character recognition, the template images (private dictionary images) are formed in a preliminary process. The template image formation can be performed by providing a sample or work that is the same kind as the work 1 on the belt conveyer, and then picking up the image of the sample by the color camera 2.

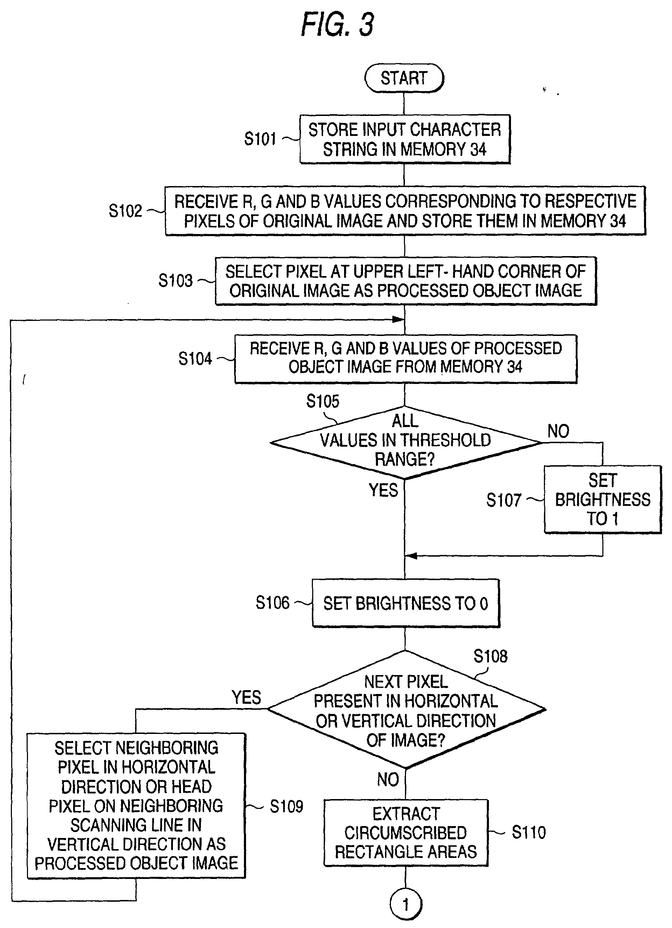

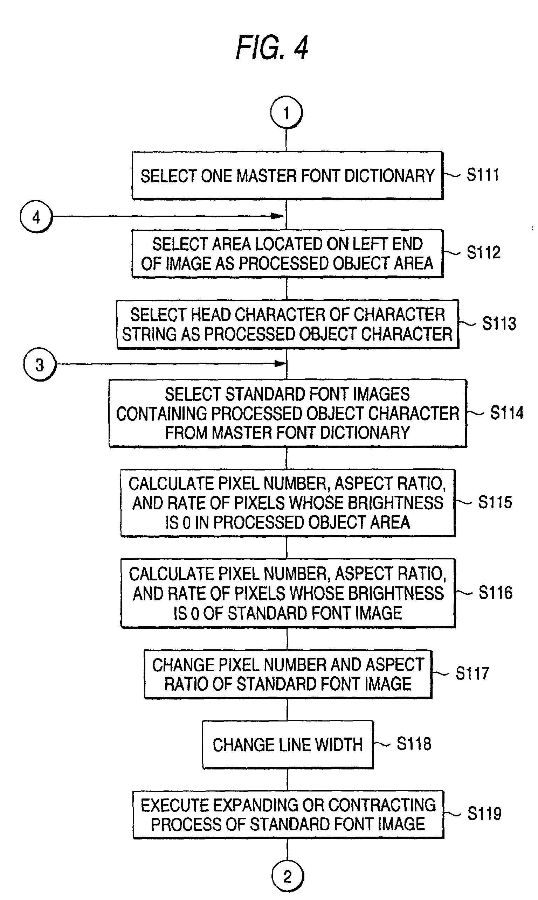

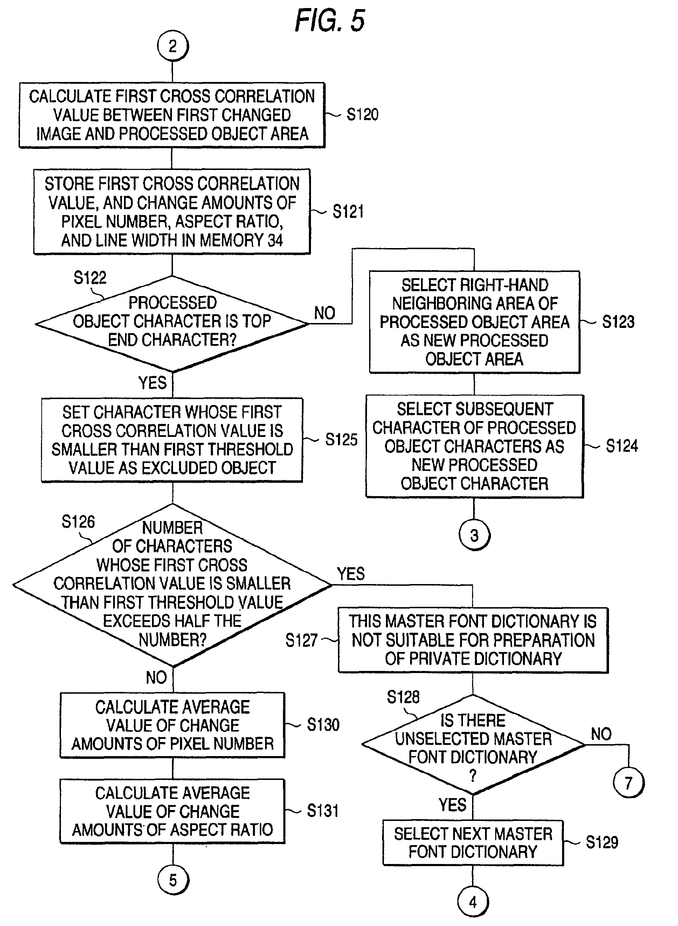

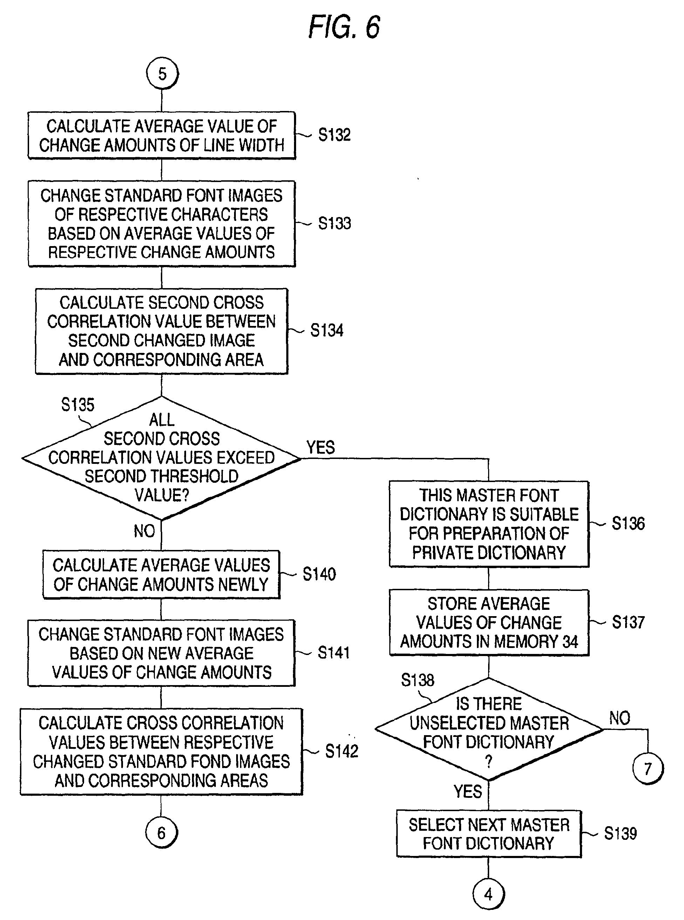

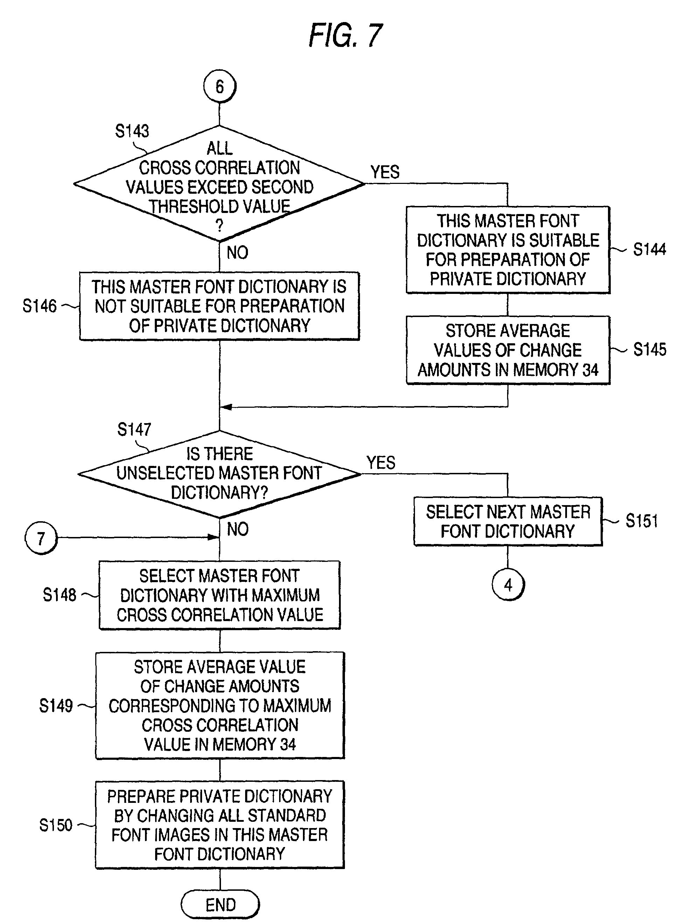

FIGS. 3, 4, 5, 6, and 7 are flowcharts that collectively show a private dictionary image forming process. A character string representing a date that is printed on the sample 1 is input by the operator and then the character string is stored in the memory 34 (step S101). Then, the R, G, B values corresponding to respective pixels of the original image 2a obtained by the image shot are received and then stored in the memory 34 (step S102). The pixel located at the upper left-hand corner of the original image 2a is selected as a first target pixel for processing (step S103). The R, G, B values of the first target pixel are retrieved from the memory 34 (step S104). Then, the R, G, B values of the first target pixel are compared with threshold values which are set to respective values (step S105).

If all values of the R, G, B values are in the threshold range, it is decided that the compared pixel has the same color as the pixel acting as the extracted object and then the brightness of the pixel is set to 0 (step S106). In contrast, if at least one value of the R, G, B values is outside of the threshold range, it is decided that the compared pixel is a non-extracted pixel and then the brightness of the pixel is set to 1 (step S107). For example, in this case, the threshold value to extract the black is set previously so as to extract the date that is printed with black ink.

In order to confirm the continuity of the object image, i.e., confirm whether or not the object image is a character string or the character, a check is performed to determine whether or not a next pixel is present in the horizontal or vertical direction of the image (step S108). If the next pixel that has not been subjected to the above process is present (i.e., in the state that the character has not been extracted yet), a neighboring pixel in the horizontal direction or a head pixel on a neighboring scanning line in the vertical direction is selected as the processed object image (step S109). The flow is returned to step S104.

Also, if the next pixel to be processed is not present (the character has been extracted) in step S108, circumscribed rectangle areas of the characters are extracted from the image (step S110).

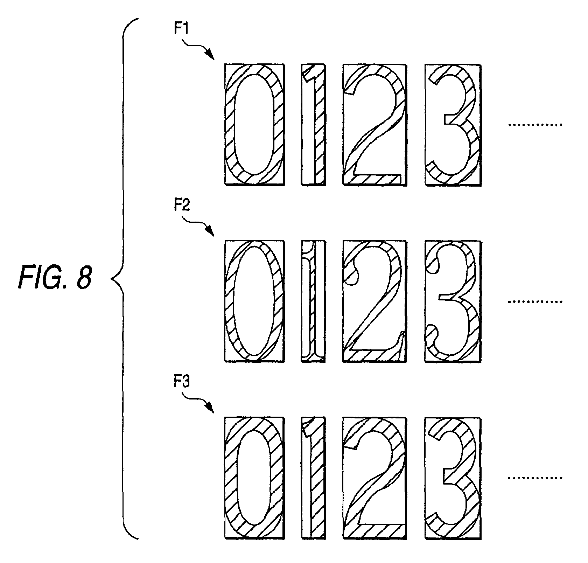

FIG. 8 shows a plurality of different master font dictionaries. Each dictionary is composed of numeric characters, characters, and symbols that are represented by respective fonts. The numeric characters, characters, and symbols are stored previously as standard font images respectively. In the present embodiment, three dictionaries consisting of three font types F1, F2, and F3 have been prepared. Also, in the dictionaries of F1, F2, and F3, each standard font image is present as a circumscribed rectangle binary image of one numeric character, character, or symbol. For example, each dictionary has numeric characters 0 to 9, alphabetic characters A to Z, symbols such as "#", "$", ".", "%", etc., and others as its standard font images. The master font dictionaries F1, F2, and F3 are stored previously in the memory 34. In the following private dictionary forming stage, particular numeric characters, characters, or symbols stored in all dictionaries F1, F2, and F3 are read sequentially as the case may be, and are practically employed. Therefore, in the present embodiment, the master font dictionary F1 is selected as the dictionary to which the first process is applied (step S111).

Then, an area located on the left end of the image out of all of the extracted area is selected as a processed object area (step S112), and a head character of the input character string, that is located on the left end of the image, is selected as the processed object character. In more detail, the image of the processed object area, "9" which is located on the left end of the character string such as 99.12.01 comprising the numeric characters and the symbols is selected as a processed object character (step S113).

Then, in order to compare with the processed object character, the character similar to the character that has been selected as the processed object character is selected from the master font dictionary (step S114). More particularly, since F1 is selected from a plurality of master font dictionaries F1, F2, and F3 as the first processed dictionary in above step S111, the standard font image "9", which is the same numeric character as "9" being selected as the processed object character, is selected from the master font dictionary F1 herein. A pixel number, an aspect ratio, and a rate of the pixels whose brightness is 0 in the processed object area containing the processed object character are calculated (step S115). Similarly, the pixel number, the aspect ratio, and the rate of the pixels whose brightness is 0 of the selected standard font image are calculated (step S116).

First, the pixel number and the aspect ratio of the standard font image "9" are changed to coincide with the pixel number and the aspect ratio of the leftmost character "9" in the processed object area (step S117).

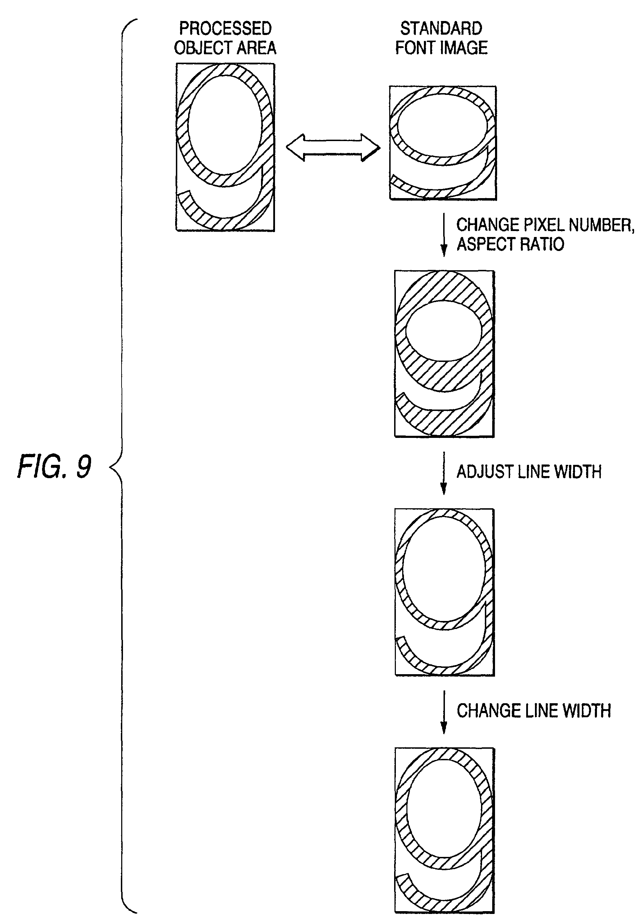

FIG. 9 is a schematic view showing a change process of the pixel number and the aspect ratio of the standard font images. As shown in FIG. 9, in the event that the aspect ratio is simply changed, the longitudinal line width becomes thinner than the lateral line width if such ratio is changed to be expanded longitudinally. Therefore, the change is applied to make constant the line width of the character of the standard font image whose aspect ratio has been changed (step S118).

Then, in order to make a ratio of the pixel of "9" whose brightness is 0 in the standard font image to a rectangular area coincide with a ratio of the pixel whose brightness is 0 in the processed object area, an expansion or contraction process of the standard font image is executed. If so, the line width that is close to the processed object character can be achieved (step S119). Then, a first cross correlation value between a first changed image in the standard font image, which has obtained by changing as described in the above step and has "9" of the master font dictionary F1, and the processed object area containing "9", which is selected as the processed object character, is calculated (step S120). In other words, under the assumption that the completely coincident cross correlation value is set to 100, for example, a cross correlation value which is a similarity between the changed image as the circumscribed rectangle binary image and the image in the processed object area is calculated herein. The first cross correlation value being calculated, and the change amounts of the pixel number, the aspect ratio, and the line width from the standard font image of the first changed image at that time are stored in the memory 34 (step S121).

Similar processes in step S114 to step S121 are applied to remaining characters and symbols "9", ".", "1", "2", ".", "0", "1". Then, it is decided whether or not the processed object character is the last or end character in the character string representing the date (step S122). Unless the processed object character is the last or end character, a right-hand neighboring area of the processed object area is selected as a new processed object area (step S123), and then a subsequent character of the processed object characters is selected as a new processed object character (step S124). The process returns to step S114.

In step S122, if it is decided that the processed object character is the last or end character in the character string (i.e., all of the date characters "9", "9", ".", "1", "2", ".", "0", "1" have been processed), the first cross correlation value calculated for the above processed object characters is compared with the first threshold value which was previously decided and stored in the memory 34, then the processed object character whose first cross correlation value is smaller than the first threshold value is selected, and then such processed object character whose first cross correlation value is smaller than the first threshold value is excluded from the average value calculation of the first change amount, which consists of the pixel number, the aspect ratio, and the line width calculated for respective processed object characters and described later (step S125). More particularly, for example, if the first threshold value is set to "70" and the first cross correlation values for the date characters "9", "9", ".", "1", "2", ".", "0", "1" are obtained as "90", "90", "80", "85", "87", "82", "75", "60" respectively, "1" whose first cross correlation value is "60" smaller than the first threshold value is excluded from the average value calculation of the first change amount, described later. This is because it is decided that the processed object character "1" has the extremely low correlation value because of character deformation such as the blur of the character, excess ink, etc. The influence of the disturbance is in the picked-up image, and thus such an abnormal value should not be reflected in the average value calculation described later. Then, it is decided whether or not the number of the character whose first cross correlation value is smaller than the first threshold value exceeds half the number of characters in the character string (step S126). If the number of the characters exceeds half the number, it is decided that this master font dictionary F1 having the standard font is not suitable for formation of the private dictionary (step S127). In this case, finally this system may inform the operator of the effect that the master font dictionary F1 has not been suitable for formation of the private dictionary. Then, it is decided whether or not there is an unselected master font dictionary (step S128). If the unselected master font dictionary exists, a next master font dictionary is selected (step S129) and then the flow is returned to step S112. If no unselected master font dictionary exists, the flow proceeds to step S148, described below.

In step S126, if the number of the characters whose first cross correlation value is smaller than the first threshold value is less than half of the number of characters in the character string, average values are calculated respectively based on the above change amount from which the characters being recognized as the excluded object in step S125 are removed. If the first "9" shows the maximum value and "2" shows the minimum value in the pixel number, for example, the average value of the change amount of the pixel number is calculated based on other pixel numbers from which such values are removed (step S130). Also, if the second "9" shows the maximum value and "2" shows the minimum value in the aspect ratio, for example, the average value of the change amount of the aspect ratio is calculated based on other aspect ratios from which such values are removed (step S131). Then, the narrowest range in which change amounts of the line widths of the characters, which are other than the excluded objects and are in excess of half of the character string are contained is detected. Then the average value of the change amount of the line width contained in such range is calculated (step S132).

Then, the pixel number, the aspect ratio, and the line width, which are the change amounts being already set for the standard font images (that is, "9", "9", ".", "1", "2", ".", "0"), and which correspond to the processed object characters and selected from the master font dictionary F1 based on the average values of respective change amounts, by comparing with the processed object fonts are changed based on the average values of respective change amounts detected in step S132 (step S133). A cross correlation value between a second changed image obtained again and the processed object area selected as the processed object character is calculated as a second cross correlation value based on this change of the change amount (step S134).

In this case, simply an average value of the change amount of all pixel numbers, an average value of the change amount of all aspect ratios, and an average value of the change amount of all line widths may be respectively calculated.

It is decided whether or not the respective second cross correlation values exceed a second threshold value that is higher than the first threshold value stored previously in the memory 34 (step S135). If the second cross correlation values of all of the second changed images that correspond to all of the selected standard font images exceed the second threshold value, it is decided that the master font dictionary that includes all of the selected standard font images is suitable for formation of the private dictionary of the processed object fonts (step S136). The average values of second change amounts are stored in the memory 34 (step S137). Then, it is decided whether or not there is an unselected master font dictionary (step S138). If the unselected master font dictionary exists, a next master font dictionary is selected (step S139) and then the flow is returned to step S112. Unless the unselected master font dictionary exists, the flow proceeds to step S148.

In step S135, unless at least one second cross correlation value of the second changed images exceeds the second threshold value, average values between respective change amounts of the standard font images calculated in steps S117, S118, and S119 and respective change amounts calculated in steps S130, S131, and S132 are calculated (step S140). As for the characters which are contained in the input character string and are not excluded from the average value calculation in step S125, the calculated average values of the change amounts are applied to the respective standard font images, and then the pixel number, the aspect ratio, and the line width are changed based on the new average values of the respective change amounts (step S141). Then, the cross correlation values between the respective changed standard font images obtained by such a change and the areas corresponding to them are respectively calculated (step S142).

Like step S135, it is decided whether or not respective cross correlation values exceed the second threshold value that is higher than the first threshold value stored in advance in the memory 34 (step S143). If so, it is decided that the master font dictionary that exceeds the second threshold value is suitable for formation of the template image of the processed object font (step S144). Then, the average values of the change amounts are stored in the memory 34 (step S145). The master font dictionary that is decided not to exceed all cross correlation values in step S143 is removed because it is not suitable for formation of the template image (step S146).

Then, it is decided whether or not there is an unselected master font dictionary (step S147). If there is no unselected master font dictionary, the standard font image, i.e., the master font dictionary, with the maximum cross correlation value is selected. More particularly, if the above process for all master font dictionaries F1, F2, and F3 has been completed, the master font dictionary with the maximum cross correlation value out of the first and second cross correlation values, which are detected as the final values of the master font dictionary, is selected (step S148). Then, the maximum cross correlation value in all dictionaries and the average value of the change amount acting as the calculation base of the maximum cross correlation value are stored in the memory 34 (step S149). Then, in order to generate the private dictionary from the master font dictionary with the maximum cross correlation value, the changed images of all standard font images held in the master font dictionary are formed by using the change amount having the maximum cross correlation value (step S150). This private dictionary is stored as the template image in the memory 34, and then the process ends.

In step S147, if there are other master font dictionaries, a next master font dictionary is selected (step S151), and then the flow is returned to step S112. Then, above steps S112 to S146 are repeatedly applied to a plurality of standard font images.

Although the configuration where three values of R, G, B values as color extract parameters are compared with the corresponding threshold values respectively is employed, the private dictionary image forming system according to the present invention is not limited to this configuration. For example, a configuration where four to six parameters obtained by adding R-G, B-G, R-B difference values to the R, G, B values may be employed. Also a configuration in which H (Hue), S (Saturation), L (Lightness) values which are HSL-converted based on the R, G, B values may be used as the color extract parameters instead of the R, G, B values. Also, difference values of the H, S, L values in addition to these values may be employed.

Also, in order to extract the character portions from the picked-up image, the configuration where the color images are binarized can be employed. In this case, such a configuration may be employed that parameter differences of non-extracted pixels located on the outside of the threshold range from the threshold range may be calculated, then the picked-up image is converted into the monochrome multi-valued image which represents the pixel by the lightness value according to such difference, and then the character recognition is carried out by pattern matching using the monochrome image.

According to the above configuration, the master font dictionary having the standard font image of the same font is previously stored, then the image obtained by picking up the image of sample where the character is printed is compared with the standard font image. The change amount to change the standard font image to match with the picked-up image is calculated. Then the size, the aspect ratio, and the line width of the character, for example, of a plurality of standard font images that have different characters of the same font are respectively changed by using such change amount. Then the private dictionary images of all of the characters necessary for the template image are formed. Therefore, the private dictionary images of all of the characters can be formed only by the characters printed on the sample and thus the completion of many samples is not needed. As a result, the time and labor required for preparing the private dictionary image can be considerably reduced.

In addition, dirt, blurred spots, blots, or the like are not contained in the previously prepared standard font images, and the private dictionary images are formed by working such standard font images. Therefore, dirt, blurred areas, blots, or the like are not contained in the private dictionary images, and thus reduction in the precision of the character recognition can be prevented.

As described in detail above, according to the private dictionary image forming system of the present invention, since the master font dictionary having the standard font image of the same font is previously stored, then the image obtained by picking up the image of one sample on which the character is printed is compared with the standard font image. The change amount to change the standard font image to match with the picked-up image is calculated, then the size, the aspect ratio, and the line width of the character, for example, of a plurality of standard font images which have different characters of the same font respectively are changed by using such change amount, and then the private dictionary images of all characters necessary for the template image are formed. Thus, the completion of a plurality of samples having all of the necessary characters is not needed and thus the time and labor required for preparing the private dictionary image can be considerably reduced.

Also, since the private dictionary images are formed by changing the size, the aspect ratio, and the line width of the standard font images that do not contain dirt, blurs, blots, or the like and then forming the character shape contained in the standard font images to simulate character shapes of the above images, dirt, blurs, blots, or the like are not contained in the private dictionary images and thus reduction in the precision of the character recognition can be prevented.

## Claims

1. A private dictionary image forming system for forming a private dictionary image using image processing by changing a master font dictionary stored previously in a memory based on an image which contains a character, comprising:
character extracting means for extracting an area in which the character is contained from the image;
character image selecting means for selecting a standard font image which is identical to the character extracted by the character extracting means from the master font dictionary;
comparing/change-amount calculating means for comparing the area extracted by the character extracting means with a standard font image selected from the master font dictionary by the character image selecting means, and calculating a change amount; and
dictionary image changing means for changing the master font dictionary by using the change amount calculated by the comparing/change-amount calculating means to form the private dictionary image.

2. The private dictionary image forming system according to claim 1, wherein the character extracting means extracts a circumscribed rectangle of the character from the image, the comparing/change-amount calculating means calculates the change amount for changing at least one of pixel number, aspect ratio, and line width of the standard font image to match with the circumscribed rectangle, and the dictionary image changing means changes at least one of the pixel number, aspect ratio, and line width of the standard font image contained in the master font dictionary by using the change amount.

3. A private dictionary image forming system for forming a private dictionary image using image processing from a plurality of master font dictionaries stored previously in a memory, based on images that contain characters, comprising:
character extracting means for extracting areas in which the characters are contained from the images;
character image selecting means for selecting standard font images which are identical to the characters extracted by the character extracting means from the plurality of master font dictionaries;
comparing/change-amount calculating means for comparing the areas extracted by the character extracting means with respective standard font images selected from the plurality of master font dictionaries by the character image selecting means, and calculating respective change amounts;
character changing means for changing the respective standard font images selected from the plurality of master font dictionaries by using the respective change amounts calculated by the comparing/change-amount calculating means to obtain changed character images;
correlation value calculating means for calculating a cross correlation value between respective changed character images obtained by the character changing means and the areas extracted by the character extracting means;
dictionary image selecting means for selecting a master font dictionary having the standard font image which is a base of the changed character images with a maximum cross correlation value out of a plurality of cross correlation values calculated by the correlation value calculating means; and
dictionary image changing means for changing the master font dictionary by using the change amounts calculated by the comparing/change-amount calculating means to form the private dictionary image.

4. The private dictionary image forming system according to claim 3, wherein the character extracting means extracts circumscribed rectangles of the characters from the images, the comparing/change-amount calculating means calculates the change amounts for changing at least one of pixel numbers, aspect ratios, and line widths of the standard font images to match with the circumscribed rectangles, and the dictionary image changing means changes at least one of the pixel numbers, aspect ratios, and line widths of the standard font images contained in the master font dictionary by using the change amounts.

5. A private dictionary image forming system for forming a private dictionary image using image processing by changing a master font dictionary stored previously in a memory based on an image which contains a character, comprising:
character extracting means for extracting an area in which the character is contained from the image;
character image selecting means for selecting a standard font image which is a part of the master font dictionary and is substantially identical to the character extracted by the character extracting means;
comparing/change-amount calculating means for comparing the area extracted by the character extracting means with a standard font image selected from the master font dictionary by the character image selecting means, and calculating a change amount; and
dictionary image changing means for changing all of the master font dictionary by using the change amount calculated by the comparing/change-amount calculating means to form the private dictionary image.

6. The private dictionary image forming system according to claim 5, wherein the character extracting means extracts a circumscribed rectangle of the character from the image, the comparing/change-amount calculating means calculates the change amount for changing at least one of pixel number, aspect ratio, and line width of the standard font image to match with the circumscribed rectangle, and the dictionary image changing means changes at least one of the pixel number, aspect ratio, and line width of the standard font image contained in the master font dictionary by using the change amount.

7. A private dictionary image forming system for forming a private dictionary image using image processing from a plurality of master font dictionaries stored previously in a memory, based on images that contain characters, comprising:
character extracting means for extracting areas in which the characters are contained from the images;
character image selecting means for selecting standard font images which are a part of the plurality of master font dictionaries and are substantially identical to the characters extracted by the character extracting means;
comparing/change-amount calculating means for comparing the areas extracted by the character extracting means with respective standard font images selected from the plurality of master font dictionaries by the character image selecting means, and calculating respective change amounts;
character changing means for changing the respective standard font images selected from the plurality of master font dictionaries by using the respective change amounts calculated by the comparing/change-amount calculating means to obtain changed character images;
correlation value calculating means for calculating a cross correlation value between respective changed character images obtained by the character changing means and the areas extracted by the character extracting means;
dictionary image selecting means for selecting a master font dictionary having a standard font image which is a base of the changed character images with a maximum cross correlation value out of a plurality of cross correlation values calculated by the correlation value calculating means; and
dictionary image changing means for changing all the master font dictionary by using the change amount calculated by the comparing/change-amount calculating means to form the private dictionary image.

8. The private dictionary image forming system according to claim 7, wherein the character extracting means extracts circumscribed rectangles of the characters from the images, the comparing/change-amount calculating means calculates the change amounts for changing at least one of pixel numbers, aspect ratios, and line widths of the standard font image to match with the circumscribed rectangles, and the dictionary image changing means changes at least one of the pixel numbers, aspect ratios, and line widths of the standard font image contained in the master font dictionary by using the respective change amounts.

9. A private dictionary image forming method for forming a private dictionary image using image processing by changing a master font dictionary stored previously in a memory based on an image which contains a character, said method comprising the steps of:
extracting an area where the character is contained from the image;
selecting a standard font image from the master font dictionary that is substantially identical to the character obtained from said step of extracting;
comparing the area obtained from said step of extracting with the standard font image selected from the master font dictionary obtained from said step of selecting, and calculating a change amount; and
changing the master font dictionary using the change amount calculated in said steps of comparing and calculating to form the private dictionary image.

10. The private dictionary image forming method according to claim 9, said step of extracting extracts a circumscribed rectangle of the character from the image, then said step of calculating calculates the change amount for changing at least one of pixel number, aspect ratio, and line width of the standard font image to match with the circumscribed rectangle, and said step of changing changes at least one of the pixel number, aspect ratio, and line width of the standard font image contained in the master font dictionary by using the change amount.

11. A private dictionary image forming method for forming a private dictionary image using image processing from a plurality of master font dictionaries stored previously in a memory, based on images that contain characters, said method comprising the steps of:
extracting areas in which the characters are contained from the images;
selecting standard font images from the plurality of master font dictionaries that are substantially identical to the characters obtained in said step of extracting;
comparing the areas extracted by the character extracting means with respective standard font images selected from the plurality of master font dictionaries in said step of selecting, and calculating respective change amounts;
changing the respective standard font images selected from the plurality of master font dictionaries by using the respective change amounts calculated in said step of calculating to obtain changed character images;
calculating a cross correlation value between respective changed character images obtained by said step of changing and the areas extracted in said step of extracting;
selecting a master font dictionary having a standard font image which is a base of the changed character images with a maximum cross correlation value out of a plurality of cross correlation values calculated in said step of calculating a cross correlation value; and
changing the master font dictionary by using the change amounts calculated in said step of calculating respective change amounts to form the private dictionary image.

12. The private dictionary image forming method according to claim 11, wherein said step of extracting extracts circumscribed rectangles of the characters from the images, said steps of comparing and calculating calculates the respective change amounts for changing at least one of pixel numbers, aspect ratios, and line widths of the standard font images to match with the circumscribed rectangles, and said step of changing the master font dictionary changes at least one of the pixel numbers, aspect ratios, and line widths of the standard font images contained in the master font dictionary by using the respective change amounts.

13. A private dictionary image forming method for forming a private dictionary image using image processing by changing a master font dictionary stored previously in a memory based on an image which contains a character, said method comprising the steps of:
extracting an area in which the character is contained from the image;
selecting a standard font image which is a part of the master font dictionary and is substantially identical to the character extracted in said step of extracting;
comparing the area extracted in said step of extracting with the standard font image selected from the master font dictionary in said step of selecting, and calculating a change amount; and
changing all of the master font dictionary by using the change amount calculated in said step of calculating to form the private dictionary image.

14. The private dictionary image forming method according to claim 13, wherein said step of extracting extracts a circumscribed rectangle of the character from the image, said step of calculating calculates the change amount for changing at least one of pixel number, aspect ratio, and line width of the standard font image to match with the circumscribed rectangle, and said step of changing the master font dictionary changes at least one of the pixel number, aspect ratio, and line width of the standard font image contained in the master font dictionary by using the change amount.

15. A private dictionary image forming method for forming a private dictionary image using image processing from a plurality of master font dictionaries stored previously in a memory, based on images that contain characters, comprising:
extracting areas in which the characters are contained from the images;
selecting standard font images which are a part of the plurality of master font dictionaries and are substantially identical to the characters extracted in said step of extracting;
comparing the areas extracted in said step of extracting with respective standard font images selected from the plurality of master font dictionaries in said step of selecting, and calculating respective change amounts;
changing the respective standard font images selected from the plurality of master font dictionaries by using the respective change amounts calculated in said step of calculating to obtain changed character images;
calculating a cross correlation value between respective changed character images obtained in said step of changing and the areas extracted in said step of extracting;
selecting a master font dictionary having the standard font image which is a base of the changed character images with a maximum cross correlation value out of a plurality of cross correlation values calculated in said step of calculating a cross correlation value; and
changing the master font dictionary by using the respective change amounts calculated in said step of calculating respective change amounts to form the private dictionary image.

16. The private dictionary image forming method according to claim 15, wherein said step of extracting extracts circumscribed rectangles of the characters from the images, said step of calculating respective change amounts calculates the change amounts for changing at least one of pixel numbers, aspect ratios, and line widths of the standard font image to match with the circumscribed rectangles, and said step of changing the master font dictionary changes at least one of the pixel numbers, aspect ratios, and line widths of the standard font image contained in the master font dictionary by using the respective change amounts.
